(19) **Europäisches Patentamt / European Patent Office / Office européen des brevets**

(11) **EP 4 283 536 B1**

(12) # EUROPEAN PATENT SPECIFICATION

(45) Date of publication and mention of the grant of the patent:
**21.05.2025 Bulletin 2025/21**

(21) Application number: **21929078.0**

(22) Date of filing: **05.03.2021**

(51) International Patent Classification (IPC):
**G06N 20/00** (2019.01) **G06N 5/04** (2023.01)
**G06V 10/774** (2022.01) **G06V 10/764** (2022.01)
**G06V 10/82** (2022.01) **G06N 3/0455** (2023.01)

(52) Cooperative Patent Classification (CPC):
**G06V 10/82; G06N 5/04; G06N 20/00; G06V 10/764; G06V 10/774;** G06N 3/0455

(86) International application number:
**PCT/JP2021/008581**

(87) International publication number:
**WO 2022/185506 (09.09.2022 Gazette 2022/36)**

(54) **SIGNAL IDENTIFICATION DEVICE**

**SIGNALIDENTIFIKATIONSEINRICHTUNG**

**DISPOSITIF D'IDENTIFICATION DE SIGNAL**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.11.2023 Bulletin 2023/48**

(73) Proprietor: **MITSUBISHI ELECTRIC CORPORATION**
**Chiyoda-ku**
**Tokyo 100-8310 (JP)**

(72) Inventors:
• **YATAKA, Ryoma**
  **Tokyo 100-8310 (JP)**
• **SHIRAISHI, Masashi**
  **Tokyo 100-8310 (JP)**

(74) Representative: **Pfenning, Meinig & Partner mbB**
**Patent- und Rechtsanwälte**
**Theresienhöhe 11a**
**80339 München (DE)**

(56) References cited:
**JP-A- 2018 503 161**

• **SOLMAZ BERKAN ET AL: "Fine-grained recognition of maritime vessels and land vehicles by deep feature embedding", IET COMPUTER VISION, THE INSTITUTION OF ENGINEERING AND TECHNOLOGY, MICHAEL FARADAY HOUSE, SIX HILLS WAY, STEVENAGE, HERTS. SG1 2AY, UK, vol. 12, no. 8, 26 July 2018 (2018-07-26), pages 1121 - 1132, XP006070653, ISSN: 1751-9632, DOI: 10.1049/IET-CVI.2018.5187**

• **ASAMI, NAOTO ET AL.: "Person identification by time-series skeletal information using a deep generative model with an additional label inserted", PREPRINTS OF THE 38TH ANNUAL CONFERENCE OF THE ROBOTICS SOCIETY OF JAPAN (RSJ); OCTOBER 9-11, 2020, vol. 38, 9 October 2020 (2020-10-09) - 11 October 2020 (2020-10-11), JP, pages 1 - 6, XP009539959**

**Description**

TECHNICAL FIELD

The present disclosed technology relates to a signal identification device.

BACKGROUND ART

An object of signal identification according to the present disclosed technology is to predict a category of a signal, that is, to classify a signal into a class to which the signal belongs. The signal handled here includes a signal obtained by electrically converting image data.

It is widely known that machine learning is effective for a problem of classification, that is, a problem of predicting a category. It is also widely known that a neural network is used as a learning model to be machine-learned.

A variational autoencoder is known as one of generation models using a neural network. In the technical field of machine learning, a learning device that learns a feature of input data, which is learning data, using a variational autoencoder has also been proposed. The variational autoencoder outputs an average and a variance of a latent variable z expressed by a multidimensional normal distribution. A learning device in which learning accuracy of an average and a variance of a latent variable z being improved in a variational autoencoder is disclosed (for example, Patent Literature 1). SOLMAZ BERKAN ET AL: "Fine-grained recognition of maritime vessels and land vehicles by deep feature embedding", IET COMPUTER VISION, THE INSTITUTION OF ENGINEERING AND TECHNOLOGY, MICHAEL FARADAY HOUSE, SIX HILLS WAY, STEVENAGE, HERTS. SG1 2AY, UK, vol. 12, no. 8, 1 December 2018 (2018-12-01), pages 1121-1132, XP006070653, ISSN: 1751-9632, DOI: 10.1049/IET-CVI.2018.5187 discloses discloses a method of improving visual recognition for maritime vessels and land vehicles using deep learning-based approaches. The method focuses on tasks including coarse-grained classification, fine-grained classification, retrieval, and verification.

CITATION LIST

PATENT LITERATURE

Patent Literature 1: JP 2020-154561 A

SUMMARY OF INVENTION

TECHNICAL PROBLEM

Incidentally, a human can view a certain image, determine what an object shown in the image represents, and classify the image. The determination of the classification performed by human beings is performed on the basis of words and concepts created by human beings. For example, the human being associates the word "bird" with the concept "it has the body surface covered with specific feathers and has a beak and wings". Furthermore, in the concept developed by human beings, for example, creating a subordinate concept "sparrow" from a broader concept "bird" is also possible. The broader concept and the subordinate concept can be replaced with a large classification and a small classification in the classification problem.

Even if an object shown in an image is unknown, a human can make a prediction on the basis of a concept developed by human beings. For example, assume that there is a person who does not know "emu" but knows other birds. When the person looks at an image showing "emu", the person can predict that it is a kind of bird because it has the body surface covered with specific feathers and has a beak and wings.

On the other hand, in the conventional learning model exemplified in Patent Literature 1, for signal data belonging to an unlearned class, it is possible to calculate the closest one among learned classes as a candidate on the basis of a feature of an image such as color. However, the conventional learning model does not have the concept that has been developed by human beings. Therefore, in the conventional technology, there is a fear that, an unlearned image of "emu" is classified as "close to capybaras" that is not a bird on the basis of a feature of an image having a brown color, a classification not desirable for humans is performed.

An object of a signal identification device according to the present disclosed technology is to solve the above problem and to perform prediction on signal data of an unlearned class in accordance with a concept developed by human beings.

SOLUTION TO PROBLEM

The invention is set out in independent claim 1

ADVANTAGEOUS EFFECTS OF INVENTION

Since the signal identification device according to the present disclosed technology has the above-described configuration, prediction can be performed on signal data of an unlearned class in accordance with a concept developed by human beings.

BRIEF DESCRIPTION OF DRAWINGS

FIG. 1 is a configuration diagram illustrating a configuration of a signal identification device according to Embodiment 1.
FIG. 2 is a hardware configuration diagram in a case where the signal identification device according to Embodiment 1 is implemented by a computer.
FIG. 3 is a schematic diagram illustrating a configuration example of a learning unit in a learning phase.
FIG. 4 is a reference diagram illustrating an example of a plot in a latent space and a second latent space.
FIG. 5 is a graph illustrating a comparative example of a result of learning according to the conventional technology and a result of learning according to the present disclosed technology.

DESCRIPTION OF EMBODIMENTS

Embodiment 1

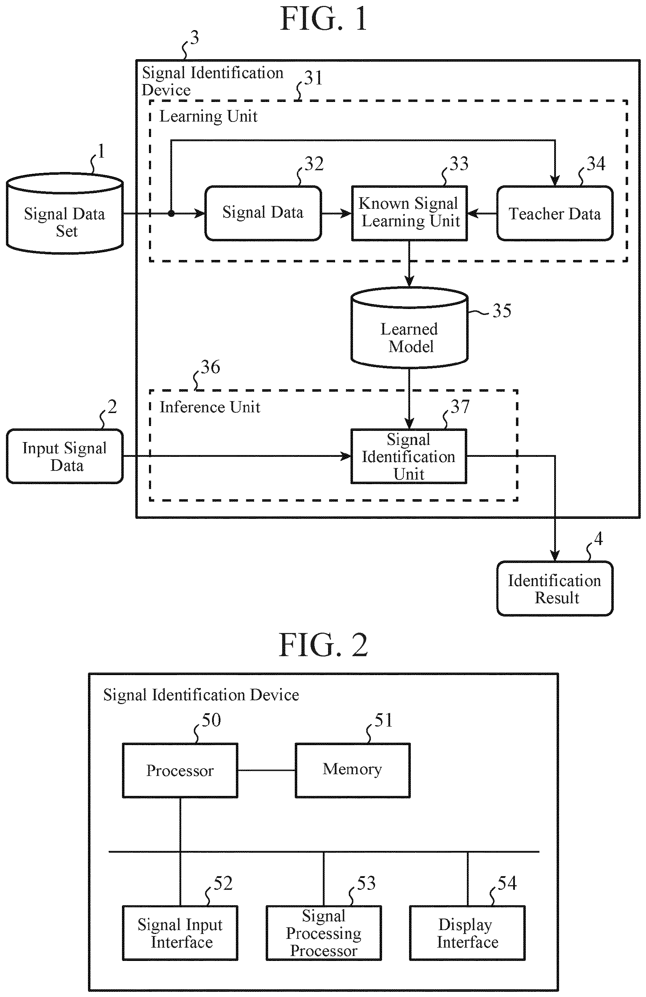

FIG. 1 is a configuration diagram illustrating a configuration of a signal identification device 3 according to Embodiment 1. As illustrated in FIG. 1, the signal identification device 3 includes a learning unit 31 and an inference unit 36. The learning unit 31 includes a known signal learning unit 33.
As illustrated in FIG. 1, the signal identification device 3 further includes two input systems and one output system. The first input system is described in the upper left part of FIG. 1 and is an input system used by the learning unit 31 in a learning phase (hereinafter referred to as "input for learning"). The second input system is described in the lower left part of FIG. 1 and is an input system used by the inference unit 36 in an inference phase (hereinafter referred to as "input for inference"). The output system is described in the lower part of FIG. 1, and is the system for the inference unit 36 to output an identification result (4) in the inference phase (hereinafter referred to as "output for inference").
A signal data set (1) illustrated in FIG. 1 is characterized in that a plurality of pairs of signal data (32) and corresponding teacher data (34) are present. Specifically, the signal data (32) is a radio wave signal acquired by a radar or an optical image. The teacher data (34) includes information related to a class to which the signal data (32) to be learned belongs. For example, in a case where certain signal data (32) is an image of pigeon, the corresponding teacher data (34) is a label including information such as "Bird, Columbiformes, Columbidae". The above-described information on the concept developed by the human beings is included in the teacher data (34).
The teacher data (34) may be simple data allocated for each label in an implementation manner in advance, for example, a letter, a number, an alphabet, a symbol, or a combination thereof. For example, an integer of 1001 may be allocated in advance to the label of "Bird, Columbiformes, Columbidae". In addition, in the case of a label related to a living organism, the integer allocated to the label may be an allocation method in accordance with the above-described concept developed by the human beings, such as 0 to 999 for mammals, 1000 to 1999 for birds, and 2000 to 2999 for fish. A label of a conceptually close class may be allocated with a close integer. Further, the type of numbers allocated to the label is not limited to one-dimensional numbers, and may be multi-dimensional numbers such as (1001, B, ..., 0).
In a preferred example of the teacher data (34) according to the present disclosed technology, a distance between the teacher data (34) and another teacher data (34) is defined, and the distance decreases when their concepts are close.
The learning model generated by the known signal learning unit 33 of the learning unit 31 by learning is illustrated in the center of FIG. 1 and is indicated as a learned model (35). The known signal learning unit 33 generates the learned model (35) on the basis of the signal data (32) and the teacher data (34). Details of the learned model (35) will become more clear by the following description.
Input signal data (2) illustrated in FIG. 1 is signal data to be identified by the signal identification device 3. The input signal data (2) and the signal data (32) is a radio wave signal acquired by radar or an optical image according to the application of the signal identification device 3.

In addition, the identification result (4) illustrated in FIG. 1 is a result of classification of the input signal data (2). As a result of the classification of the input signal data (2), when it is determined that the input signal data (2) belongs to a certain learned class, the identification result (4) includes information of this class. As a result of the classification of the input signal data (2), when it is determined that the input signal data (2) does not belong to any class and is unlearned, the identification result (4) includes that the input signal data (2) is an unlearned class and a large classification result of a broader concept that the input signal data (2) would belong to. For example, in the above-described example of "emu", the identification result (4) includes that the class is an unlearned class and that a large classification of a broader concept to which the input signal data (2) would belong to is "bird". Furthermore, the signal identification device 3 according to the present disclosed technology may indicate a learned class having the closest conceptual property as the identification result (4) instead of the large classification result of the broader concept to which the input signal data (2) would belong to. For example, in the above-described example of "emu", another result (4) may be that the class is an unlearned class and that the class having the closest conceptual property is a learned class "ostrich".

FIG. 2 is a hardware configuration diagram in a case where the signal identification device 3 according to Embodiment 1 is implemented by a computer. As illustrated in FIG. 2, the signal identification device 3 may be implemented by a computer. The signal identification device 3 in FIG 2 includes a processor 50, a memory 51, a signal input interface 52, a signal processing processor 53, and a display interface 54.

The operation of the signal identification device 3 will become more clear by the following description divided into a learning phase and an inference phase.

The operation of the signal identification device 3 in the learning phase becomes clear by comparison with conventional machine learning.

The conventional machine learning is known to be developed from the viewpoint of how to draw a boundary for each class in a space with respect to a classification problem. One example of this viewpoint technology is Support Vector Machine. The support vector machine is designed to obtain a classification surface having a margin, and a non-linear classification surface such as a curved surface is also known. Here, the space is called a feature amount space or a latent space.

Conventional supervised learning machine learning considers a space in which only a feature of input data is a variable with respect to labeled input data. Taking the above-described "emu" and "capybara" as an example, both of the images have a feature that the color is brown, and thus, are plotted at close places in the feature amount space. For this reason, in the conventional technology, there is a fear that an unlearned image of "emu" is classified undesirably for humans such as "close to capybaras" on the basis of a feature of an image whose color is brown.

The signal identification device 3 according to the present disclosed technology considers not only a variable including features of input data but also a variable based on teacher data. Therefore, the present disclosed technology considers a feature amount space including a variable including a feature of input data and a variable based on teacher data. The variable based on the teacher data may be a type of number allocated to the label described above. Taking the above-described "emu" and "capybaras" as an example, a plurality of variables including features of both input data have close values, but variables based on both teacher data do not have close values. Therefore, in the present disclosed technology, there is no fear that an undesirable classification for humans, such as "close to capybaras" for an unlearned image of "emu", would occur.

In the present disclosed technology, as described above, the dimension of the feature amount space may be obtained by adding the dimension of the variable including the features of the input data and the dimension of the variable based on the teacher data. Furthermore, in the present disclosed technology, a coordinate transformation may be performed to reflect the information of the teacher data while setting the dimension of the feature amount space as the dimension of the variable including the features of the input data.

Such a structure, in addition to having continuity with respect to continuous change of input data in the feature amount space or the latent space, having continuity with respect to continuous change of teacher data, is referred to as a "manifold structure" in the present disclosed technology. A method for implementing that a space has a manifold structure without changing a dimension becomes more clear by the following description. The expression "continuous change" herein may be paraphrased as "minute change" or "located in the vicinity".

The difference between the conventional technology and the present disclosed technology also appears in a loss function used in the learning phase. The loss function is also referred to as a cost function (expressed in KATAKANA), a cost function, or an evaluation function.

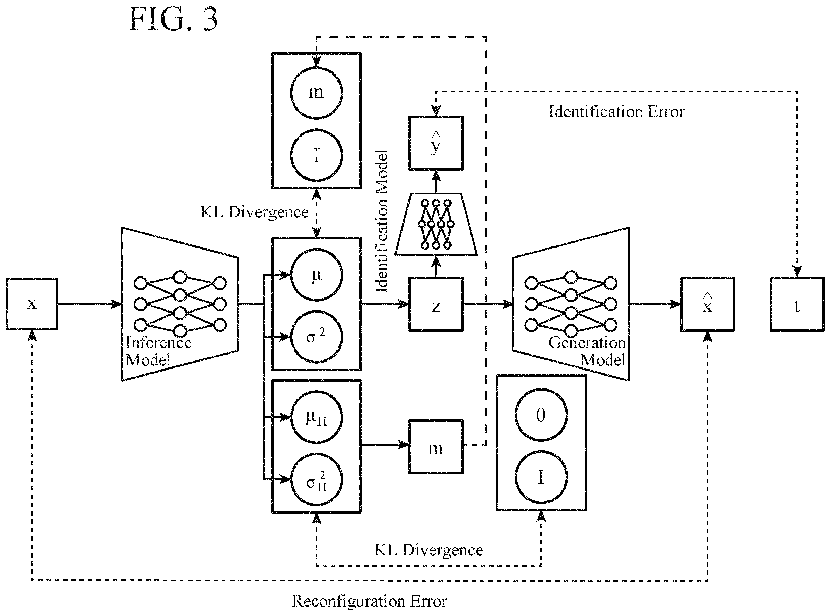

FIG. 3 is a schematic diagram illustrating a configuration example of the learning unit 31 in the learning phase. FIG. 3 clarifies a loss function used in the learning phase of the present disclosed technology. As illustrated in FIG. 3, the learning unit 31 includes an inference model, a generation model, and an identification model.

In FIG. 3, x represents signal data. In FIG. 3, t represents teacher data.

In the inference model in FIG. 3, the signal data (x) is input, and a latent variable z of the signal data (x) and a second latent variable m of the signal data (x) are output. The inference model illustrated in FIG. 3 is an autoencoder that outputs an average and a variance of the latent variable z expressed by a multidimensional normal distribution. When the signal data (x) is image data, it can be said that the inference model is a mapping from the image space to the latent space.

The latent variable z illustrated in FIG. 3 is generated so that the average is $\mu$ and the variance is $\sigma^2$. In addition, the second latent variable m illustrated in FIG. 3 is generated so that the average is $\mu_H$ and the variance is $\sigma_H{}^2$. More specifically, the latent variable z may be obtained by sampling from a Gaussian distribution having an average of $\mu$ and a variance of $\sigma^2$. The latent variable z is a variable having the same meaning as that according to the conventional technology. A plot of the latent variable z in the latent space representing the latent variable z is generated to be a Gaussian distribution for each class of the small classification. On the other hand, the second latent variable m, which is a feature of the present disclosed technology, is generated so that a plurality of classes having the same large classification of the broader concept are put together into one Gaussian distribution. Specifically, the second latent variable m is a representative value of each of a plurality of classes having the same large classification of the broader concept. For example, the second latent variable m may be defined as an average value of the latent variables z in a certain class.

The inference model may be, for example, a neural network or another mathematical model.

In the identification model in FIG. 3, the latent variable z is input, and an identification result (hereinafter referred to as "class identification result") for the class to which the signal data (x) belongs is output. The class identification result is represented by a symbol with a hat attached to y in FIG. 3. For example, the class identification result may be an integer allocated to the label described above. In other words, the identification model is a mapping from the latent space to the identification space.

The identification model may be, for example, a neural network or another mathematical model.

In the generation model in FIG. 3, the latent variable z is input, and the estimated value of the signal data (x) is output so as to restore the signal data (x). The estimated value of the signal data (x) is represented by a symbol with a hat attached to x in FIG. 3. In other words, the identification model is a mapping from the latent space to the image space.

The generation model is a neural network

The inference model, the identification model, and the generation model change in the learning process so as to achieve the purpose of learning. The above-described loss function is obtained by quantifying the purpose of learning. The varying portions of the inference model, the identification model, and the generation model are referred to as weight parameters or simply parameters.

The learning device according to the conventional technology includes a term related to a "reconfiguration error" illustrated in FIG. 3 as a loss function. The reconfiguration error is a difference between the signal data (x) and the estimated value of the signal data (x). The term related to the reconfiguration error in the loss function is expressed by, for example, the following mathematical expression.

$$\mathcal{L}_r := \|x - \hat{x}\|_1 \qquad \ldots \quad (1)$$

Although Expression (1) is defined by 1-norm, the term related to the reconfiguration error is not limited thereto. The term related to the reconfiguration error may be defined by another norm such as 2-norm, or may be defined by the square of 2-norm that can be used by the least squares method.

The loss function used by the learning unit 31 according to the present disclosed technology includes a term related to "identification error" in addition to the reconfiguration error. The identification error is a difference between the teacher data (t) and the class identification result. The term related to the identification error in the loss function is expressed by, for example, the following mathematical expression.

$$\mathcal{L}_c := H(t, \hat{y}) = -\sum_{c=0}^{C-1} t_c \log \hat{y}_c \qquad \ldots \quad (2)$$

Expression (2) is defined as a general expression using the cross entropy as an error function, but is not limited thereto.

The loss function used by the learning unit 31 more preferably further includes two terms related to KL divergence. The two terms related to the KL divergence are expressed, for example, by the following mathematical expressions.

$$\begin{aligned} \mathcal{L}_{KL} \quad &:= \quad -D_{KL}[q_\emptyset \| p] \\ &= \quad -D_{KL}[\mathcal{N}(\mu, \sigma^2 I) \| \mathcal{N}(m, I)] \end{aligned} \qquad \ldots \quad (3)$$

$$\mathcal{L}_{KLM} \;\; := \;\; -D_{KL}[\mathcal{N}(\boldsymbol{\mu_H}, \sigma_H{}^2 \boldsymbol{I}) \| \mathcal{N}(\boldsymbol{0}, \boldsymbol{I})] \qquad .\;.\;. \quad (4)$$

KL divergence is a measure of how similar two probability distributions are. $D_{KL}$ [| |] expressed by Expression (3) and Expression (4) represents a function for obtaining KL divergence. Further, "I" in Expression (4) represents an identity matrix.

Expression (3) is a KL divergence of a Gaussian distribution having an average of $\mu$ and a variance of $\sigma^2$ and a Gaussian distribution having an average of m and a variance of I. Expression (4) is a KL divergence of a Gaussian distribution having an average of $\mu_H$ and a variance of $\sigma_H{}^2$ and a normal distribution having an average of 0 and a variance of I. The role of these two KL divergences will become more clear by the following.

The signal identification device 3 according to Embodiment 1 may use a loss function expressed by the following mathematical expression as a loss function used for learning by the learning unit 31.

$$L := \alpha L_r + \frac{\beta}{2}(L_{KL} + L_{KLM}) + \gamma L_c \qquad .\;.\;. \quad (5)$$

Here, $\alpha$, $\beta$, and $\gamma$ are weights.

The learning of the learning unit 31 is performed so as to minimize the loss function represented by Expression (5). For updating the parameters of the inference model, the identification model, and the generation model, for example, an optimization method by a stochastic gradient descent method may be used. Each of the learned inference model, identification model, and generation model is represented as a learned model (35) in FIG. 1.

The effect of the term $L_c$ illustrated in Expression (2) is to update the identification model so that the signal identification device 3 outputs a correct class identification result.

In addition, an effect of the term of the $L_{KLM}$ illustrated in Expression (4) is that plots of a plurality of classes having the same large classification of the broader concept form one Gaussian distribution in the second latent space. In other words, those having the same large classification of the broader concept are close in distance in the second latent space. In the case of different large classifications of the broader concept, the distance in the second latent space is long even if the features of the images are similar.

By including the term of $L_c$ and the term of $L_{KLM}$ in the loss function, the learning unit 31 is learned to extract the manifold structure of the entire signal data set.

The effect of the term $L_r$ illustrated in Expression (1) is to update the generation model so that the generation model correctly restores the signal data (x).

In addition, the effect of the term of $L_{KL}$ shown in Expression (3) is to be in the latent space and form a Gaussian distribution for each class.

In the present disclosed technology, since the center of each class is m having the manifold structure of the entire data set, the positional relationship of the Gaussian distribution of each class can take over the manifold structure of the second latent space.

To summarize the above, it can be said that the latent space is of each signal data unit similar to that in the conventional technology, and the second latent space is of a class unit viewed macroscopically.

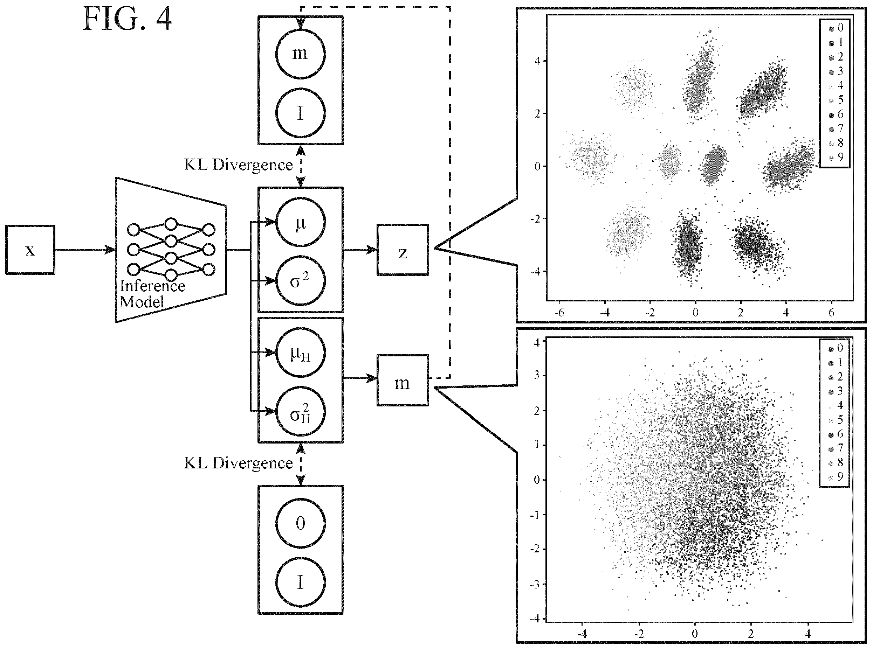

FIG. 4 is a reference diagram illustrating an example of a plot in the latent space and the second latent space. As illustrated in FIG. 4, in the plot example of the latent space, it can be seen that the Gaussian distribution is formed for each class. In the plot example of the second latent space, it can be seen that a plurality of classes having the same large classification of the broader concept, that is, the entire data set is formed in one Gaussian distribution. Furthermore, in the plot example of the latent space, the Gaussian distribution is formed for each class, and at the same time, the positional relationship of each class in the second latent space is reflected. That is, it can be said that the latent variable z according to the present disclosed technology is in a state of maintaining the manifold structure of the entire signal data set.

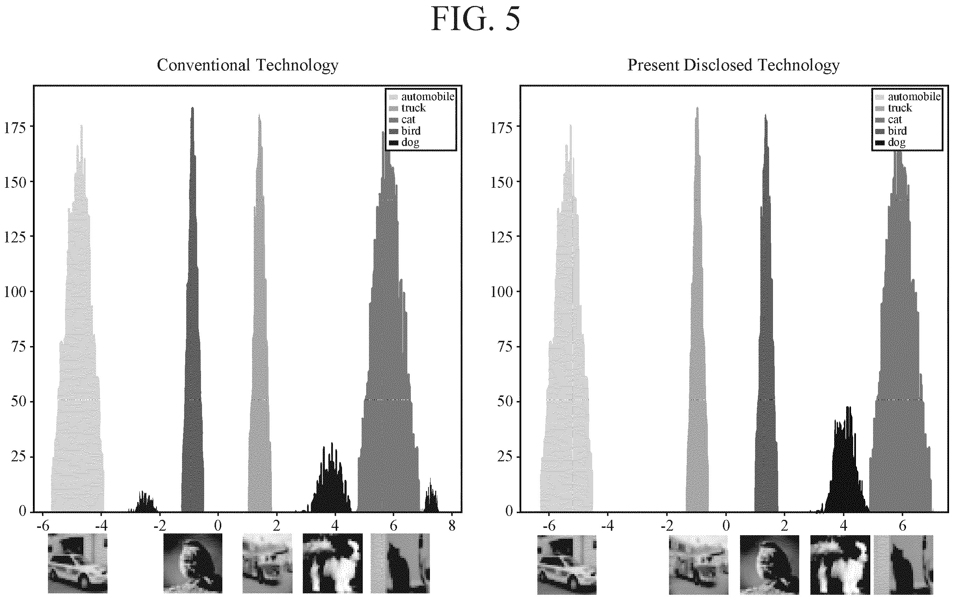

FIG. 5 is a graph illustrating a comparative example of a result of learning according to the conventional technology and a result of learning according to the present disclosed technology. In FIG. 5, the left column shows a result of learning according to the conventional technology, and the right column shows a result of learning according to the present disclosed technology.

In the example illustrated in FIG. 5, the learned class is an automobile, a truck, a cat, and a bird, and the unlearned class is a dog.

The result of learning according to the conventional technology has no regularity in the distribution of learned classes, and large classification according to a broader concept of "animal" and "machine" is not performed.

In contrast, large classification according to a broader concept of "animal" and "machine" is performed on the result of learning according to the present disclosed technology, and the distribution of dogs that are unlearned classes appears at a position close to the distribution of cats that are the same animals.

The operation of the signal identification device 3 in the inference phase will become more clear by the following description.

In the inference phase, the inference unit 36 uses the learned model (35) learned in the learning phase (see FIG. 3).

The learned model (35) has each Gaussian distribution defined in the latent space for each learned class.

The learned model (35) and the input signal data (2) are input to a signal identification unit 37 of the inference unit 36. The signal identification unit 37 plots the latent variable z of the input signal data (2) in the latent space and calculates a correlation with each Gaussian distribution of the learned class defined by the learned model (35).

Incidentally, the Gaussian distribution is also referred to as the normal distribution and is a type of probability distributions. Abnormality detection is known as one of techniques using the normal distribution. Furthermore, as a method for measuring the degree of deviation of a certain sample using the measurement result of the normal distribution, a method using the Mahalanobis distance is known.

It is conceivable that the inference unit 36 according to the present disclosed technology also calculates the identification result (4) of the input signal data (2) using the Mahalanobis distance.

$$D_M(\boldsymbol{z_x}, p^k) \quad = \quad \left\| \left( \boldsymbol{z_x} - \boldsymbol{\mu}_{k,Train} \right)^\top \left( \boldsymbol{\Sigma}_{k,Train} \right)^{-1} \left( \boldsymbol{z_x} - \boldsymbol{\mu}_{k,Train} \right) \right\|_2$$

wherein

$$
\begin{aligned}
D_M(\boldsymbol{z_x}, p^k) \quad &: \quad \text{Mahalanobis distance} \\
\boldsymbol{\mu}_{k,Train} \quad &: \quad \text{Average} \\
\boldsymbol{\Sigma}_{k,Train} \quad &: \quad \text{Covariance matrix} \\
p^k \quad &: \quad \text{Gaussian distribution} \quad \mathcal{N}\big(\boldsymbol{\mu}_{k,Train}, \boldsymbol{\Sigma}_{k,Train}\big)
\end{aligned}
\quad \cdots (6)
$$

where

    Mahalanobis distance
    Average
    Covariance
    Gaussian distribution

Here, k represents a serial number of the learned class, and the lower subscript "Train" represents that learning has been completed. In addition, a superscript T represents transposition. In addition, $z_x$ in Expression (6) represents the latent variable z of the input signal data (2).

On the basis of the Mahalanobis distance calculated by Expression (6), the inference unit 36 outputs the identification result (4) expressed by the following Expression.

$$\hat{k} = \arg\min_k D_M(\boldsymbol{z_x}, p^k) \qquad \cdots \quad (7)$$

The signal identification unit 37 of the inference unit 36 determines an equal probability curve representing an n% section in the distribution for each class as a boundary for recognizing that the signal data belongs to the class. That is, if $z_x$ is inside an equal probability curve of a certain class, the signal identification unit 37 determines that $z_x$ is likely to belong to the class as an identification result. In addition, if $z_x$ is not inside the equal probability curve of any class, the signal identification unit 37 may determine that $z_x$ is likely to belong to the unlearned class as the identification result. In a case where $z_x$ is not inside the equal probability curve of any class, the signal identification unit 37 may output information of the closest class from the information of the distribution of the class having the closest Mahalanobis distance, or may output a large classification that is a broader concept.

As described above, since the signal identification device 3 according to Embodiment 1 has the above-described configuration and functions, prediction can be performed on signal data of an unlearned class in accordance with the concept developed by human beings.

INDUSTRIAL APPLICABILITY

The signal identification device 3 according to the present disclosed technology can be used as a device that performs signal identification of a radio wave signal acquired by a radar, identification of an image acquired by a camera, and other signal identification, and thus has industrial applicability.

REFERENCE SIGNS LIST

3: signal identification device, 31: learning unit, 33: known signal learning unit, 36: inference unit, 37: signal identification unit, 50: processor, 51: memory, 52: signal input interface, 53: signal processing processor, 54: display interface

**Claims**

1.   A signal identification device (3) for classifying an input signal data (2), the input signal data being a radio wave signal acquired by a radar or an optical image, comprising

a learning unit (31) including a known signal learning unit (33) configured to generate a learned model (35) based on signal data (32) and teacher data (34);
an inference model (35) using a neural network, which generates, based on the input signal data (2), a first latent variable (z) in which a distribution for each class in a latent space is defined according to the class of classification, and a second latent variable (m) in which a distribution for each large classification in the latent space is defined according to the large classification of a broader concept of the class, the first latent variables and the second latent variables being generated from the latent space including variables of input data and variables based on teacher data, and
an inference unit (36) configured to output, using the inference model (35), an identification result (4) of the input signal data (2), wherein
the inference unit (36) further includes a signal identification unit (37) configured to determine an equal probability curve representing n% section in the distribution for each class as a boundary for recognizing that the input signal data belongs to the class, wherein the distribution is a Gaussian distribution defined in the latent space for each learned class, and wherein the signal identification unit (37) determines that the input signal data belong to a class if its corresponding latent variable is inside the equal probability curve of that class,
wherein the inference model is learned using both signal data and teacher data, the teacher data including information of the class to which the signal data belongs and information of the broader concept of the class.

**Patentansprüche**

1.   Signalidentifizierungseinrichtung (3) zum Klassifizieren von Eingangssignaldaten (2), wobei die Eingangssignaldaten ein von einem Radar erfasstes Funkwellensignal oder ein optisches Bild sind, umfassend:

eine Lerneinheit (31), aufweisend eine Bekanntes-Signal-Lerneinheit (33), die eingerichtet ist, ein gelerntes Modell (35) auf der Grundlage von Signaldaten (32) und Teacher-Daten (34) zu erzeugen;
ein Inferenzmodell (35) unter Verwendung eines neuronalen Netzes, das auf der Grundlage der Eingangssignaldaten (2) eine erste latente Variable (z), in welcher eine Verteilung für jede Klasse in einem latenten Raum gemäß der Klasse der Klassifizierung definiert ist, und eine zweite latente Variable (m), in welcher eine Verteilung für jede große Klassifizierung in dem latenten Raum gemäß der großen Klassifizierung eines breiteren Konzepts der Klasse definiert ist, erzeugt, wobei die ersten latenten Variablen und die zweiten latenten Variablen aus dem latenten Raum erzeugt werden, der Variablen von Eingangsdaten und Variablen auf der Grundlage von Teacher-Daten enthält, und
eine Inferenzeinheit (36), die eingerichtet ist, unter Verwendung des Inferenzmodells (35) ein Identifikationsergebnis (4) der Eingangssignaldaten (2) auszugeben, wobei
die Inferenzeinheit (36) ferner eine Signalidentifizierungseinheit (37) aufweist, die eingerichtet ist, eine Gleichwahrscheinlichkeitskurve zu bestimmen, die n% Abschnitt in der Verteilung für jede Klasse als eine Grenze zum Erkennen, dass die Eingangssignaldaten zu der Klasse gehören, darstellt, wobei die Verteilung eine Gauß-Verteilung ist, die in dem latenten Raum für jede gelernte Klasse definiert ist, und wobei die Signalidentifizierungseinheit (37) bestimmt, dass die Eingangssignaldaten zu einer Klasse gehören, falls ihre entsprechende latente Variable innerhalb der Gleichwahrscheinlichkeitskurve dieser Klasse liegt,
wobei das Inferenzmodell unter Verwendung sowohl von Signaldaten als auch von Teacher-Daten gelernt wird,
wobei die Teacher-Daten Informationen über die Klasse, zu der die Signaldaten gehören, und Informationen über das breitere Konzept der Klasse enthalten.

# EP 4 283 536 B1

**Revendications**

1. Dispositif d'identification de signal (3) pour classifier des données de signal d'entrée (2), les données de signal d'entrée étant un signal d'onde radio acquis par un radar ou une image optique, comprenant

   une unité d'apprentissage (31) incluant une unité d'apprentissage de signal connu (33) configurée pour générer un modèle d'apprentissage (35) sur la base de données de signal (32) et de données d'enseignant (34) ;
   un modèle d'inférence (35) utilisant un réseau neuronal, qui génère, sur la base des données de signal d'entrée (2), une première variable latente (z) dans laquelle une distribution pour chaque classe dans un espace latent est définie en fonction de la classe de classification, et une seconde variable latente (m) dans laquelle une distribution pour chaque grande classification dans l'espace latent est définie en fonction de la grande classification d'un concept plus large de la classe, les premières variables latentes et les secondes variables latentes étant générées à partir de l'espace latent, incluant des variables de données d'entrée et des variables basées sur des données d'enseignant, et
   une unité d'inférence (36) configurée pour délivrer en sortie, en utilisant le modèle d'inférence (35), un résultat d'identification (4) des données de signal d'entrée (2), dans lequel
   l'unité d'inférence (36) inclut en outre une unité d'identification de signal (37) configurée pour déterminer une courbe de probabilité égale représentant n % de section dans la distribution pour chaque classe en tant que limite pour reconnaître que les données de signal d'entrée appartiennent à la classe, dans lequel la distribution est une distribution gaussienne définie dans l'espace latent pour chaque classe d'apprentissage, et dans lequel l'unité d'identification de signal (37) détermine que les données de signal d'entrée appartiennent à une classe si sa variable latente correspondante est à l'intérieur de la courbe de probabilité égale de cette classe,
   dans lequel le modèle d'inférence fait l'objet d'un apprentissage en utilisant à la fois des données de signal et des données d'enseignant, les données d'enseignant incluant des informations de la classe à laquelle les données de signal appartiennent et des informations du concept plus large de la classe.

# FIG. 1

# FIG. 2

FIG. 3

FIG. 4

# FIG. 5

Conventional Technology

Present Disclosed Technology

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020154561 A

**Non-patent literature cited in the description**

- Fine-grained recognition of maritime vessels and land vehicles by deep feature embedding. **SOLMAZ BERKAN et al.** IET COMPUTER VISION. THE INSTITUTION OF ENGINEERING AND TECHNOL-OGY, 01 December 2018, vol. 12, 1121-1132